## Europäisches Patentamt
## European Patent Office
## Office européen des brevets

(19)

(11) Numéro de publication: **0 194 179**
**B1**

(12) **FASCICULE DE BREVET EUROPEEN**

(45) Date de publication du fascicule du brevet:
14.06.89

(51) Int. Cl.⁴: **F16C 1/22**, F16D 13/75

(21) Numéro de dépôt: 86400304.1

(22) Date de dépôt: 12.02.86

(54) Commande mécanique par câble à dispositif de réglage automatique comprenant un détecteur électrique de mise en oeuvre.

(30) Priorité: 20.02.85 FR 8502461

(43) Date de publication de la demande:
10.09.86 Bulletin 86/37

(45) Mention de la délivrance du brevet:
14.06.89 Bulletin 89/24

(84) Etats contractants désignés:
DE GB IT

(56) Documents cités:
FR-A- 2 557 228

(73) Titulaire: **Société des Câbles du Mans Société Anonyme, 50, Avenue de la Libération, 72000 Le Mans(FR)**

(72) Inventeur: **Deligny, Jean, 132, rue du Villaret, F-72000 Le Mans(FR)**

(74) Mandataire: **Lewis, David Overington, c/o Babcock International plc 165 Great Dover Street, London SE1 4YA(GB)**

ACTORUM AG

## Description

La présente invention concerne les commandes mécaniques par câble coulissant dans un conduit de gainage, incorporant un dispositif de réglage automatique pour le rattrapage de jeux fonctionnels, plus particulièrement pour commandes d'embrayage à friction de véhicule automobile, du type comprenant un dispositif de verrouillage débrayable solidarisant sélectivement l'une à l'autre, lors de l'actionnement de la commande mécanique, une structure d'embout extérieure et une structure d'embout intérieure solidaire d'une extrémité du conduit de gainage et reçue télescopiquement dans la structure d'embout extérieure, les deux structures d'embout étant sollicitées en écartement axialement l'une par rapport à l'autre.

Dans EP-A 30 494 et EP-A 55 649 on decrit commande mécanique par cable coulissant dans un conduit de gainage, incorporant un dispositif de réglage automatique comprenant un dispositif de verrouillage débrayable agencé entre les extrémités de deux tronçons de conduit de gainage disjoints successifs, ce dispositif de verrouillage solidarisant sélectivement l'une à l'autre, lors de l'actionnement de la commande mécanique, une structure d'embout extérieure commande mécanique par câble (1) coulissant dans un conduit de gainage, incorporant un dispositif de réglage automatique comprenant un dispositif de verrouillage débrayable (4; 4') agencé entre les extrémités de deux tronçons (2, 2') de conduit de gainage disjoints successifs, ce dispositif de verrouillage (4, 4') solidarisant sélectivement l'une à l'autre, lors de l'actionnement de la commande mécanique, une structure d'embout extérieure (6, 6') monté sur l'extrémité de l'un (2') des ces deux tronçons de conduit et une structure d'embout intérieure (2, 3) solidaire de l'extrémité de l'autre tronçon (2) de conduit, cette structure d'embout intérieure (2, 3) étant reçue télescopiquement dans la structure d'embout extérieure (6, 6'), les deux structures d'embout étant sollicitées (7) en écartement axialement l'une par rapport à l'autre.

Selon la présente invention, on propose une commande mécanique par câble ayant au moins un moyen de ligne électrique incorporant une paire de contacts électriques sélectivement coopérants, respectivement un premier contact rapporté sur la structure d'embout extérieure et un second contact rapporté sur la structure d'embout intérieure de façon à pouvoir se déplacer avec elle.

De façon plus spécifique, selon une caractéristique particulière de l'invention, le second contact est associé à la structure d'embout intérieure par une liaison débrayable, avantageusement par une liaison à frottement.

Avec un tel agencement, il est ainsi possible, lors de chaque mise en oeuvre de la commande mécanique, d'obtenir immédiatement, par ouverture ou fermeture du moyen de ligne électrique incorporant la paire de contacts électriques coopérants, un signal électrique indicatif de l'actionnement de l'organe à actionner sans nécessiter de prévoir des contacts électriques particuliers au voisinage de l'organe à actionner ou de l'organe d'actionnement de la commande mécanique (typiquement une pédale) avec les inconvénients bien connus tenant à l'environnement de ces organes d'actionnement ou à actionner.

Du fait du parfait fonctionnement des dispositifs de réglage automatique des commandes mécaniques par câble du type sus-mentionné, la course de l'organe d'actionnement ou pédale demeure constante quelle que soit l'usure progressive des garnitures de friction de l'embrayage de sorte que la perception d'un état d'usure avancé de cet embrayage nécessite une inspection visuelle.

C'est pourquoi, la présente invention a pour autre objet de proposer une commande mécanique telle que définie plus haut comprenant deux moyens de lignes électriques analogues mais distincts de façon à obtenir, outre l'information concernant l'actionnement de l'organe à actionner, une information, déduite de la cinématique du dispositif de réglage automatique, sur l'état d'usure de l'organe à actionner.

Ainsi, selon une autre caractéristique de l'invention, on prévoit, pour les seconds contacts de chaque moyen de ligne, des plages axiales de débattement différentes, à savoir pour l'un des moyens de ligne, une plage réduite inférieure à la course de verrouillage du dispositif de verrouillage, et, pour l'autre moyen de ligne, une course plus importante prédéterminée correspondant à la course d'usure fixée pour l'organe à actionner.

D'autres caractéristiques et avantages de la présente invention ressortiront de la description suivante de modes de réalisation, donnés à titre illustratif mais nullement limitatif, faite en référence avec les dessins annexés, sur lesquels :

- la Figure 1 est une vue schématique en coupe longitudinale d'un premier mode de réalisation d'une commande mécanique par câble selon l'invention ;

- la Figure 2 est une vue partielle à plus grande échelle de la commande mécanique de la Figure 1 montrant l'aménagement des contacts électriques ; et

- la Figure 3 est une vue en coupe longitudinale d'un second mode de réalisation de commande mécanique par câble selon l'invention.

Dans la description qui va suivre et sur les dessins, les éléments identiques ou analogues portent les mêmes chiffres de référence, éventuellement indicés.

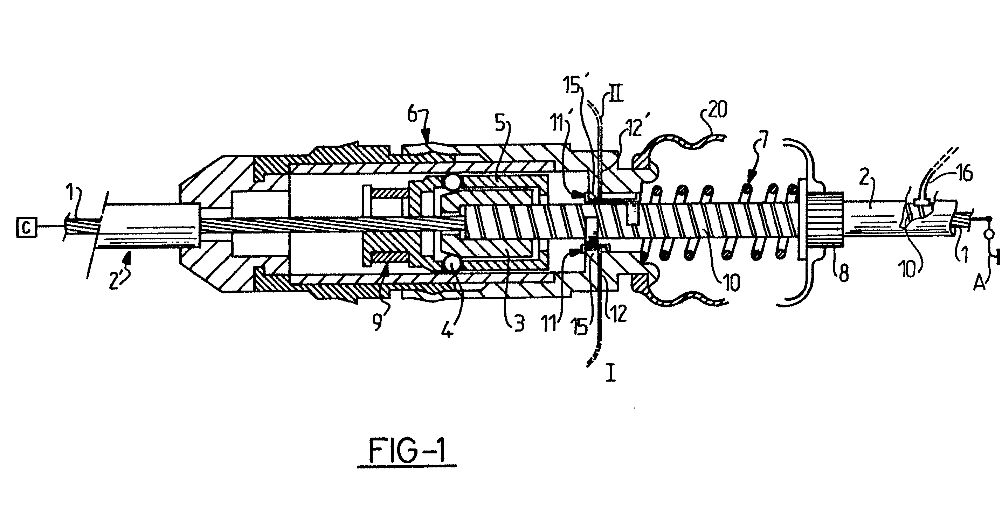

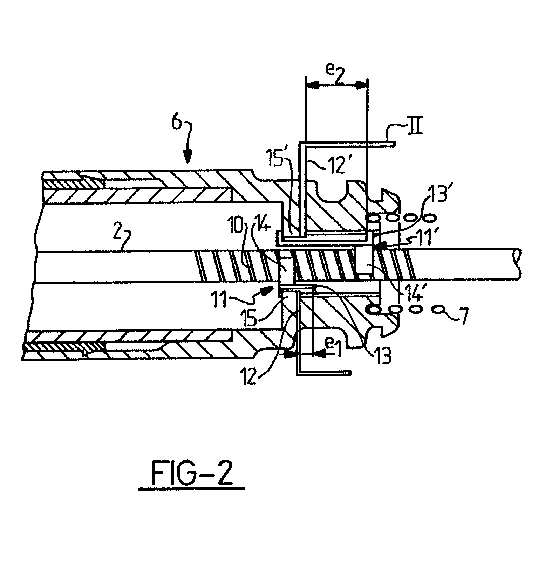

La commande mécanique par câble représentée sur les Figures 1 et 2 est du type incorporant un dispositif de réglage automatique agencé entre deux structures d'embout solidaires de deux portions axialement disjointes du conduit de gainage du câble, et ne nécessitant donc pas de montage sur un support fixe, conformément à l'enseignement du document EP-A-0 055 649 sus-mentionné. On rappellera brièvement que, dans ce mode de réalisation, la commande mécanique comprend une longueur de câble 1 monté à coulissement axial dans un conduit de gainage flexible constitué de deux tronçons disjoints successifs 2 et 2'. L'extrémité du premier tronçon de conduit 2 est emmanchée dans un bloc terminal massif 3, traversé par le câble 1, et présentant une surface périphérique troncônique formant came d'actionnement pour des organes de verrouillage, en l'occurence des billes de coïncement 4 portées par une cage cylindrique 5, elle-même reçue dans le logement cylindrique interne d'une structure d'embout extérieure formant boîtier 6 avec la surface intérieure cylindrique de laquelle coopèrent les billes de coïncement 4, la structure d'embout extérieure 6 étant solidarisée à l'extrémité adjacente de l'autre tronçon de conduit 2. Un ressort écarteur 7 est disposé entre la seconde structure d'embout extérieure 6 et une collerette 8 sertie sur le premier tronçon de conduit 2. La commande du dispositif de verrouillage débrayable, à savoir le déplacement relatif entre la structure d'embout intérieure 2,3 et la structure d'embout extérieure 6 est réalisée, dans le mode de réalisation représenté, par un frotteur 9 relié à la cage 5 et coopérant, dans une liaison à friction débrayable, avec la portion de brin centrale du câble 1. Dans ce type de commande mécanique, dans la configuration de repos (représentée sur la Figure 1), les deux structures d'embout 2,3 et 6 sont désolidarisées et le ressort écarteur 7 peut effectuer le rattrapage de jeux fonctionnels susceptibles d'apparaître dans la commande mécanique ou dans l'organe à actionner C. Lors de chaque actionnement de la commande mécanique par l'organe d'actionnement A, le câble 1 entraîne, dans un premier temps, le frotteur 9 pour amener les billes de coïncement 4 à verrouiller l'une à l'autre les deux structures d'embout 2, 3 et 6, après quoi le câble continue d'être actionné en glissant relativement au frotteur 9. Conformément à l'invention, cette course de verrouillage des billes 4 est mise à profit pour fournir une indication sur l'actionnement de la commande mécanique. Les conduits de gainage de câble étant en règle générale pourvus d'une armure métallique hélicoïdale, cette armure métallique 10 est dénudée sur une portion du conduit 2 entre le bloc 3 et la collerette 8 et sur cette portion dénudée du conduit 2 est montée une première structure de contact électrique mobile 11 destinée à coopérer avec un second contact électrique 12 solidaire de la structure d'embout extérieure 6.

Comme on le voit mieux sur la Figure 2, la structure de contact mobile 11 comporte une partie 13 en forme de U solidaire d'un cavalier métallique élastique 14 en forme de C engagé à force en écartement sur la partie dénudée du tronçon de conduit 2. La structure 13 en U est agencée de façon que soit rendu prisonnier entre les deux ailes opposées du U un épaulement faisant saillie vers l'intérieur 15 de la structure d'embout extérieure 6, le contact fixe 12 étant constitué d'une lame métallique traversant radialement la structure d'embout extérieure 6 réalisée au moins localement en matériau plastique, de façon que son extrémité radiale intérieure constitue en fait l'une des faces de butée axialement opposées de l'épaulement 15. La partie 13 en U de la structure de contact mobile est dimensionnée de façon que, dans la configuration de repos représentée sur les Figures 1 et 2, l'une des ailes du U soit en butée avec la face de butée de l'épaulement 15 opposée à la lame 12 et qu'il existe entre cette lame 12 et l'autre aile de la pièce 13 en U un jeu $e_1$ inférieur à la

course de verrouillage sus-mentionnée de la cage à billes 5, par exemple de l'ordre de 1 à 1,5 mm. Ainsi, lors de chaque mise en oeuvre de la commande mécanique par câble, il se produit un déplacement relatif du tronçon de conduit 2 par rapport à la structure d'embout extérieure 6 annulant le jeu $e_1$ pour fermer (dans le mode de réalisation représenté), le premier moyen de ligne I incorporant le contact fixe 12, le contact mobile 11, l'armure 10 et un conducteur électrique 16 connecté sur une portion dénudée de l'armure 10 du premier tronçon de conduit 2 en un point au-delà de la collerette 8. La liaison à friction entre le contact électrique mobile 11 et le premier tronçon de conduit 2 au moyen du cavalier élastique 14 permet au contact mobile 11 de se positionner automatiquement à chaque manoeuvre et de se déplacer vis à vis du premier tronçon de conduit 2 lors de chaque phase de rattrapage automatique de jeu entre les deux tronçons de conduit 2 et 2'.

Selon un autre aspect de l'invention, comme on le voit bien sur les Figures 1 et 2, la commande mécanique comporte en outre une seconde structure de contact mobile 11' identique à la première structure de contact mobile 11 et coopérant similairement avec un épaulement 15' de la structure d'embout extérieure 6 délimité latéralement par un second contact fixe 12' appartenant à un second moyen de ligne électrique II , avec cette différence que le jeu au repos $e_2$ entre la lame de contact fixe 12' et l'aile adjacente de la pièce 13' en U du second contact mobile 11' est ici déterminé pour correspondre à la course d'usure choisie par le constructeur pour l'organe à actionner C. Ainsi, les contacts 11' et 12' ne se ferment (dans le mode de réalisation représenté) que lorsque les tronçons de conduit 2 et 2' se sont déplacés téléscopiquement l'un par rapport à l'autre d'une distance $e_2$ pour le rattrapage des jeux de la commande mécanique correspondant précisément au degré d'usure déterminé pour l'organe à actionner, par exemple de l'ordre de 8 à 10 mm. Les seconds contacts 11' et 12' n'interviennent ainsi normalement qu'une fois dans la vie utile de l'organe à actionner C alors que les premiers contacts 11 et 12 sont mis en oeuvre à chaque actionnement de la commande mécanique.

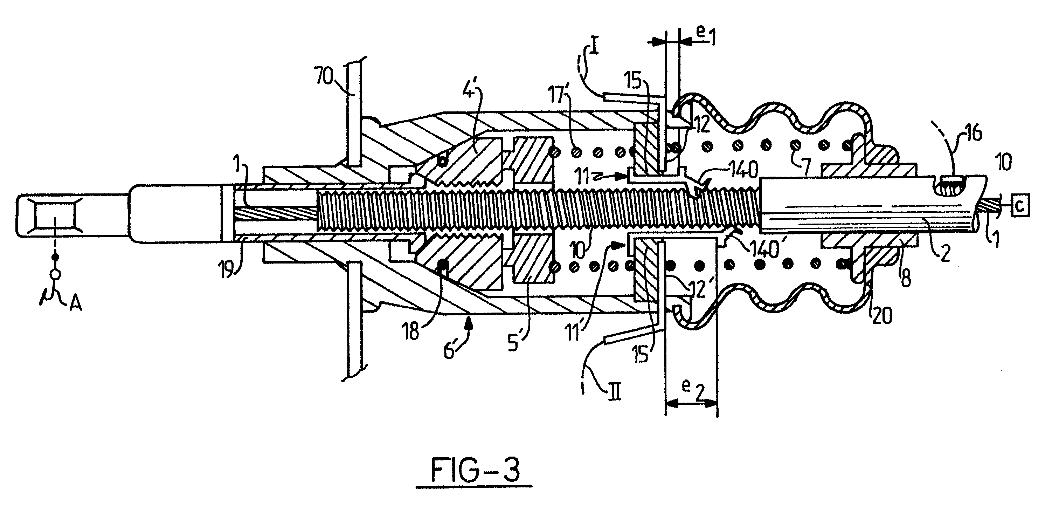

La commande mécanique représentée sur la Figure 3 diffère de celle précédemment décrite en ce sens que le dispositif de réglage automatique est disposé ici dans une structure d'embout extérieure fixe 6' et montée sur une paroi stationnaire 70 au voisinage de l'organe d'actionnement A. Dans ce cas, le dispositif de verrouillage comprend des mâchoires 4' supportées sur une cage 5' coopérant avec une surface cônique formée, ici, par la structure d'embout extérieure 6, les mâchoires étant normalement sollicitées en engagement avec l'armure dénudée de l'extrémité du tronçon de conduit 2 par des ressorts 17 et 18, les mâchoires étant toutefois maintenues écartées du conduit 2, en configuration de repos de la commande mécanique, par un poussoir 19 actionné par l'organe d'actionnement A afin de permettre, dans cette même configuration de repos, au ressort écarteur 7 de rattraper les jeux éventuels apparaissant dans la commande mécanique ou dans l'organe à actionner C. On retrouve, dans de ce mode de réalisation, les mêmes paires de contacts 11, 12 et 11',12' que dans le mode de réalisation précédemment décrit. Toutefois, dans le mode de réalisation de la Figure 3, l'armure 10, du tronçon de conduit 2 étant avantageusement constituée spécialement pour présenter extérieurement des indentations, on peut prévoir, comme moyen de liaison débrayable entre les contacts 11 et 11' et l'armure 10 des simples pattes élastiques profilées 140 et 140' s'engageant entre les indentations de l'armure 10 en place et lieu des cavaliers décrits précédemment.

Dans l'un ou l'autre mode de réalisation on peut prévoir, comme on le voit sur la Figure 2, de faire coulisser l'aile formant contact des contacts 11 et 11' dans des rainures longitudinales de l'alésage interne de la structure d'embout extérieure 6 ou 6' pour éviter les rotations intempestives de ces contacts mobiles par rapport à la structure d'embout extérieure. On notera également que, les commandes mécaniques telles que décrites étant avantageusement pourvues d'un soufflet de protection 20 disposé entre la collerette 8 et la structure d'embout extérieure 6 ou 6', autour du ressort écarteur 7, les paires de contact 11, 12 et 11',12' sont parfaitement protégées contre l'introduction d'agent contaminant, garantissant ainsi une parfaite fiabilité tant mécanique qu'électrique des moyens de détection électriques.

Quoique la présente invention ait été décrite en relation avec des modes de réalistion particuliers, elle ne s'en trouve pas limitée mais est au contraire susceptible de modifications et de variantes qui apparaîtront à l'homme de l'art. En particulier, dans la description qui précède, les paires de contacts 11,12 et 11',12' sont agencées de façon à être normalement ouverts et se fermer pour fournir un signal électrique indicatif. En variante, on peut prévoir, pour la première paire de contacts 11 et 12 un agencement inversé, normalement fermé et s'ouvrant lors de la mise en oeuvre du dispositif. De même, au lieu d'utiliser l'armure dénudée du tronçon de conduit 2 comme support conducteur pour les contacts mobiles 11 et 11', on peut utiliser, à partir de la collerette 8, une tige métallique creuse distincte assurant exactement les mêmes fonctions.

## Revendications

1. Commande mécanique par câble (1) coulissant dans un conduit de gainage, incorporant un dispositif de règlage automatique comprenant un dispositif de verrouillage débrayable (4; 4') agencé entre les extrémités de deux tronçons (2, 2') de conduit de gainage disjoints successifs, ce dispositif de verrouillage (4, 4') solidarisant sélectivement l'une à l'autre, lors de l'actionnement de la commande mécanique, une structure d'embout extérieure (6, 6') monté sur l'extrémité de l'un (2') des ces deux tronçons de conduit et une structure d'embout intérieure (2, 3) solidaire de l'extrémité de l'autre tronçon (2) de conduit, cette structure d'embout intérieure (2, 3) étant reçue téléscopiquement dans la structure d'embout extérieure (6, 6'), les deux structures d'embout étant sollicitées (7) en écartement axialement l'une par rapport à l'autre, caractérisée en ce qu'elle comprend au moins un moyen de ligne électrique (I, II) incorporant une paire de contacts électriques sélectivement coopérants, respectivement un premier contact (12; 12')´rapporté sur la structure d'embout extérieure (6, 6') et un second contact (11, 11') rapporté sur la structure d'embout intérieure de façon à pouvoir se déplacer avec elle.

2. Commande mécanique selon la revendication 1, caractérisée en ce que le second contact (11; 11') est associé à la structure d'embout intérieure par une liaison débrayable (14; 14'/140; 140').

3. Commande mécanique selon la revendication 2, caractérisée en ce qu'elle comprend des moyens coopérants (13, 15; 13', 15') entre le second contact (11; 11') et la structure d'embout extérieure (6; 6') limitant à une plage axiale déterminée le déplacement relatif du second contact par rapport à la structure d'embout extérieure.

4. Commande mécanique selon la revendication 2 ou la revendication 3, caractérisé en ce que le second contact (11; 11') est associé à la structure d'embout intérieure par une liaison à frottement.

5. Commande mécanique selon la revendication 3 ou la revendication 4, caractérisée en ce que les moyens coopérants comprennent deux faces de butée axialement opposées (15; 15') de la structure d'embout extérieure (6; 6') et deux faces de butée axialement en vis à vis (13; 13') du second contact (11; 11').

6. Commande mécanique selon la revendication 5, caractérisée en ce que deux des faces de butée coopérantes de la structure d'embout extérieure (12; 12') et du second contact (13; 13') forment surfaces de contact électrique.

7. Commande mécanique selon l'une des revendications 4 à 6, caractérisée en ce que la structure d'embout intérieure est électriquement conductrice (10), le second contact électrique comprenant une parite de montage métallique (14; 14'; 140; 140') engagée élastiquement sur la structure d'embout intérieure.

8. Commande mécanique selon l'une des revendications 3 à 7, caractérisée en ce qu'elle comprend deux moyens de lignes électriques distincts (I; II).

9. Commande mécanique selon la revendication 8, caractérisée en ce que les plages axiales déterminées de débattement (e₁; e₂) pour les seconds contacts (11; 11') de chaque moyen de ligne (I; II) sont différentes.

10. Commande mécanique selon l'une des revendications précédentes, caractérisée en ce que la structure d'embout extérieure (6') est montée fixe sur un support stationnaire (70), l'extrémité du tronçon de conduit (2') respectif étant monté coulissant axialement dans cette structure d'embout fixe (6').

11. Commande mécanique selon l'une des revendications 1 à 9 caractérisée en ce que la structure d'embout extérieure (6) est montée fixe sur le tronçon de conduit (2').

## Claims

1. Mechanical control by cable (1) sliding in a shielding conduit incorporating an automatic adjustment device including a releasable locking device (4, 4'), arranged between the ends of two successive separated conduit portions (2, 2') the locking device (4, 4') firmly interconnecting selectively during the operation of the mechanical control, an outer ferrule structure (6, 6') mounted on the end of one (2') of the two conduit portions and an inner ferrule structure (2, 3) fixed to the end of the other conduit portion (2), this inner ferrule structure (2, 3) being housed telescopically in the outer ferrule structure (6, 6'), the two ferrule structures being biased (7) apart axially relative to one another, characterised in that it comprises at least one electrical path means (I, II) incorporating a pair of electrical contacts which cooperate selectively, respectively a first contact (12; 12') attached to the outer ferrule structure (6, 6') and a second contact (11; 11') attached to the inner ferrule structure in such a way as to be able to move with it.

2. Mechanical control according to Claim 1, characterized in that the second contact (11; 11') is associated with the inner ferrule structure by a disengeable connection (14; 14'; / 140; 140').

3. Mechanical control according to Claim 2, characterized in that it comprises between the second contact (11; 11') and the outer ferrule structure (6; 6') cooperating means (13, 15; 13', 15') limiting the relative movement of the second contact relative to the outer ferrule structure to a determined axial range.

4. Mechanical control according to Claim 2 or Claim 3, characterized in that the second contact (11; 11') is associated with the inner ferrule structure by frictional engagement.

5. Mechanical control according to Claim 3 or Claim 4, characterized in that the cooperating means incorporate two axially opposed abutment surfaces (15; 15') of the outer ferrule structure (6; 6') and two abutment surfaces facing one another axially (13; 13') of the second contact (11; 11').

6. Mechanical control according to Claim 5, characterized in that two of said cooperating abutment surfaces of the outer ferrule structure (12; 12') and of the second contact (13; 13') and of the second contact (13; 13') form electrical contact surfaces.

7. Mechanical control according to one of Claims 4 to 6, characterized in that the inner ferrule structure is electrically conductive (10), the second electrical contact incorporating a metal mounting portion (14; 14'; 140; 140') engaged elastically on the inner ferrule structure.

8. Mechanical control according to one of Claims 3 to 7, characterized in that it incorporates two separate electrical path means (I; II).

9. Mechanical control according to Claim 8, characterized in that the axial ranges of movement of disengagement ($e_1$; $e_2$) for the second contact (11, 11') of each electrical path means (I, II) are different.

10. Mechanical control according to one of the preceding claims, characterized in that the other ferrule structure (6') is mounted fixed on a stationary support (70), the end of the conduit portion (2') being mounted so as to slide axially in this fixed ferrule structure (6').

11. Mechanical control according to one of the claims 1–9, characterized in that the other ferrule structure (6) is mounted fixed on the conduit portion (2').

## Patentansprüche

1. Mechanische Betätigungsvorrichtung durch ein in einer Hülle als Führung längsverschiebbares Kabel (1), die eine selbsttätige Nachstellvorrichtung umfaßt, welche eine auskuppelbare Verriegelungseinrichtung (4; 4') aufweist, die zwischen den Enden zweier aufeinanderfolgender, voneinander getrennter Hüllenabschnitte (2, 2') angeordnet ist; die Verriegelungseinrichtung (4, 4') verbindet wahlweise bei der Betätigung der mechanischen Betätigungsvorrichtung eine auf dem Ende des einen (2') der beiden Hüllenabschnitte montierte äußere rohrförmige Struktur (6, 6') mit einer inneren rohrförmigen Struktur (2, 3), die an dem Ende des anderen Hüllenabschnittes (2) befestigt ist; die innere rohrförmige Struktur (2, 3) wird teleskopisch in der äußeren rohrförmigen Struktur (6, 6') aufgenommen; die beiden rohrförmigen Strukturen sind axial voneinander vorgespannt, dadurch gekennzeichnet, daß die Betätigungsvorrichtung mindestens eine elektrische Leitungseinrichtung (I, II) aufweist, die zwei trennscharf zusammenarbeitende elektrische Kontakte umfaßt, und zwar ein erster Kontakt (12; 12'), der auf der äußeren rohrförmigen Struktur (6, 6') befestigt ist, und ein zweiter Kontakt (11, 11'), der auf der inneren rohrförmigen Struktur in der Weise befestigt ist, daß er sich mit dieser verschieben kann.

2. Mechanische Betätigungsvorrichtung nach Anspruch 1, dadurch gekennzeichnet, daß der zweite Kontakt (11; 11') infolge einer auskuppelbaren Verbindung (14; 14'/140; 140') der inneren rohrförmigen Struktur zugeordnet ist.

3. Mechanische Betätigungsvorrichtung nach Anspruch 2, dadurch gekennzeichnet, daß sie Kooperationseinrichtungen (13, 15; 13', 15') zwischen dem zweiten Kontakt (11; 11') und der äußeren rohrförmigen Struktur (6; 6') umfaßt, welche die relative Verschiebung des zweiten Kontaktes mit Bezug auf die äußere rohrförmige Struktur auf einen bestimmten axialen Bereich begrenzen.

4. Mechanische Betätigungsvorrichtung nach Anspruch 2 oder 3, dadurch gekennzeichnet, daß der zweite Kontakt (11; 11') infolge Reibverbindung der inneren rohrförmigen Struktur zugeordnet ist.

5. Mechanische Betätigungsvorrichtung nach Anspruch 3 oder 4, dadurch gekennzeichnet, daß die Kooperationseinrichtungen zwei an einer axialen Stelle sich gegenüberstehende Anschlagsflächen (15; 15') der äußeren rohrförmigen Struktur (6; 6') und zwei sich axial gegenüberstehende Anschlagsflächen (13, 13') des zweiten Kontaktes (11; 11') aufweisen.

6. Mechanische Betätigungsvorrichtung nach Anspruch 5, dadurch gekennzeichnet, daß die beiden miteinander kooperienden Anschlagsflächen der äußeren rohrförmigen Struktur (12; 12') und des zweiten Kontaktes (13; 13') die Oberflächen von elektrikschen Kontakten bilden.

7. Mechanische Betätigungsvorrichtung nach einem der Ansprüche 4 bis 6, dadurch gekennzeichnet, daß die innere rohrförmige Struktur elektrisch leitend (10) ist und daß der zweite elektrische Kontakt einen Teil der metallischen Halteeinrichtung (14; 14'; 140; 140') darstellt, die in elastischem Eingriff mit der inneren rohrförmigen Struktur steht.

8. Mechanische Betätigungsvorrichtung nach einem der Ansprüche 3 bis 7, dadurch gekennzeichnet, daß sie zwei unterschiedliche elektrische Leitungseinrichtungen (I; II) umfaßt.

9. Mechanische Betätigungsvorrichtung nach Anspruch 8, dadurch gekennzeichnet, daß die axialen Bereiche der Ausrückbewegung ($e_1$; $e_2$) für die zweiten Kontakte (11; 11') jeder Leitungseinrichtung (I; II) unterschiedlich sind.

10. Mechanische Betätigungsvorrichtung nach einem der vorhergehenden Ansprüche, dadurch gekennzeichnet, daß die äußere rohrförmige Struktur (6') fest auf einem gerätefesten Träger (70) montiert ist und daß das Ende des jeweiligen Hüllenabschnittes (2') axial verschieblich in dieser gerätefesten, rohrförmigen Struktur (6') montiert ist.

11. Mechanische Betätigungsvorrichtung nach einem der Ansprüche 1 bis 9, dadurch gekennzeichnet, daß die äußere rohrförmige Struktur (6) fest auf dem Hüllenabschnitt (2') montiert ist.

FIG-1

EP 0 194 179 B1

EP 0 194 179 B1

FIG-2

FIG-3

EP 0 194 179 B1